# EUROPEAN PATENT APPLICATION

(11) **EP 4 629 701 A1**
(43) Date of publication of application: **08.10.2025**
(21) Application number: 24741212.5
(22) Date of filing: 09.01.2024
(51) Int. Cl.: H04W 48/06

(54) **NETWORK FUNCTION SELECTION METHOD AND APPARATUS, COMMUNICATION DEVICE, AND READABLE STORAGE MEDIUM**

(30) Priority: 09.01.2023 CN 202310026462
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: LI, Aihua, Beijing 100032 (CN); LIU, Le, Beijing 100032 (CN)
(74) Representative: Murgitroyd & Company
(86) International application number: PCT/CN2024/071239
(87) International publication number: WO 2024/149213

(57) **Abstract**

A method and apparatus for selecting a network function, a communication device and a readable storage medium are provided, which belong to the technical field of communications. The method for selecting the network function according to an embodiment of the present disclosure includes: sending, by a first network function, a registration request to a second network function; wherein the registration request includes first information, and the first information is used to indicate that the first network function supports or does not support initiating reselection of a target first network function, and/or the first information is used by a service consumer to determine whether the reselection of the target first network function is initiated by the first network function.

## Description

### CROSS-REFERENCE TO RELATED APPLICATION

The present application claims a priority to the Chinese patent application No. 202310026462.X filed in China on January 9, 2023, a disclosure of which is incorporated herein by reference in its entirety.

### TECHNICAL FIELD

The present disclosure relates to the field of communication technology, and in particular, to a method and an apparatus for selecting a network function, a communication device and a readable storage medium.

### BACKGROUND

In related art, a service consumer such as an Application Function (AF) can send a data service request related to a terminal to a Network Data Analytics Function (NWDAF) and/or a Data Collection Coordination Function (DCCF), wherein the NWDAF is used to provide a data analytics service and the DCCF is used to provide a data collection service. When the terminal changes its location due to mobility, it may move out of a service area of the NWDAF or the DCCF, at which point reselection of the NWDAF or the DCCF needs to be initiated. However, it is not yet clear how to initiate the reselection of network functions such as the NWDAF or the DCCF.

### SUMMARY

An object of the embodiments of the present disclosure is to provide a method and an apparatus for selecting a network function, a communication device and a readable storage medium, so as to solve the problem of how to initiate reselection of a network function.

To solve the above technical problems, the present disclosure is implemented as follows.

In a first aspect, a method for selecting a network function is provided, including:
sending, by a first network function, a registration request to a second network function; wherein the registration request includes first information, and the first information is used to indicate that the first network function supports or does not support initiating reselection of a target first network function, and/or the first information is used by a service consumer to determine whether the reselection of the target first network function is initiated by the first network function.

In a second aspect, a method for selecting a network function is provided, including:
receiving, by the first network function, a first request from the service consumer; wherein the first request includes second information, and the second information is used to indicate any one of the followings: that the reselection of the target first network function is initiated by the first network function, or that the reselection of the target first network function is initiated by the service consumer.

In a third aspect, a method for selecting a network function is provided, including:
sending, by a service consumer, a first request to a first network function; wherein the first request includes second information, and the second information is used to indicate any one of the followings: that reselection of a target first network function is initiated by the first network function, or that reselection of a target first network function is initiated by the service consumer.

In a fourth aspect, an apparatus for selecting a network function is provided, including:
a first sending module, configured to send a registration request to a second network function; wherein the registration request includes first information, and the first information is used to indicate that a first network function supports or does not support initiating reselection of a target first network function, and/or the first information is used by a service consumer to determine whether the reselection of the target first network function is initiated by the first network function.

In a fifth aspect, an apparatus for selecting a network function is provided, including:
a third receiving module, configured to receive a first request from a service consumer;
wherein the first request includes second information, and the second information is used to indicate any one of the followings: that reselection of a target first network function is initiated by a first network function, or that reselection of a target first network function is initiated by the service consumer.

In a sixth aspect, an apparatus for selecting a network function is provided, including:
a fifth sending module, configured to send a first request to a first network function;
wherein the first request includes second information, and the second information is used to indicate any one of the followings: reselection of a target first network function is initiated by the first network function, or reselection of a target first network function is initiated by a service consumer.

In the seventh aspect, a communication device is provided, which includes a processor, a memory, and a program or an instruction stored in the memory and executable on the processor, wherein the program or the instruction, when executed by the processor, implements the steps of the method according to the first aspect, or the steps of the method according to the second aspect, or the steps of the method according to the third aspect.

In an eighth aspect, a readable storage medium storing a program or an instruction is provided. The program or the instruction, when executed by a processor, implements the steps of the method according to the first aspect, or the steps of the method according to the second aspect, or the steps of the method according to the third aspect are implemented.

In the embodiments of the present disclosure, a registration process may be used to indicate whether the first network function, such as the NWDAF/DCCF, supports the reselection capability, and/or enable the service consumer to determine whether the reselection of the target first network function is initiated by the first network function, thereby clarifying whether the reselection of the target first network function is initiated by the first network function (such as the NWDAF and/or DCCF).

### BRIEF DESCRIPTION OF THE DRAWINGS

FIG. 1 is a flow chart of a method for selecting a network function provided by an embodiment of the present disclosure;
FIG. 2 is another flow chart of a method for selecting a network function provided by an embodiment of the present disclosure;
FIG. 3 is yet another flow chart of a method for selecting a network function provided by an embodiment of the present disclosure;
FIG. 4 is a structural diagram of an apparatus for selecting a network function provided by an embodiment of the present disclosure;
FIG. 5 is another structural diagram of an apparatus for selecting a network function provided by an embodiment of the present disclosure;
FIG. 6 is yet another structural diagram of an apparatus for selecting a network function provided by an embodiment of the present disclosure;
FIG. 7 is a structural diagram of a communication device provided in an embodiment of the present disclosure.

### DETAILED DESCRIPTION

The technical solutions in the embodiments of the present disclosure will be clearly and thoroughly described below with reference to the accompanying drawings in the embodiments of the present disclosure. Obviously, the described embodiments are only some of the embodiments of the present disclosure, not all of them. Based on the embodiments in the present disclosure, all other embodiments obtained by those of ordinary skill in the art without making creative efforts fall within the scope of the present disclosure.

Terms "first", "second" and the like in the specification and claims of the present disclosure are used to distinguish similar objects and are not intended to describe a specific sequence or order. It should be understood that data used like this may be interchanged under a proper condition for implementation of the embodiments of the disclosure described here in a sequence apart from those shown or described here. Moreover, the objects distinguished by "first", "second" and the like generally belong to the same category, and the number of the objects is not limited. For example, a first object may be one or more. In addition, "and/or" in the specification and claims indicates at least one of the related objects, and the symbol "/" generally indicates that the associated objects are in an "or" relationship.

The method and apparatus for selecting a network function, the communication device and the readable storage medium provided by the embodiments of the present disclosure are described in detail below with reference to the accompanying drawings through specific embodiments and application scenarios.

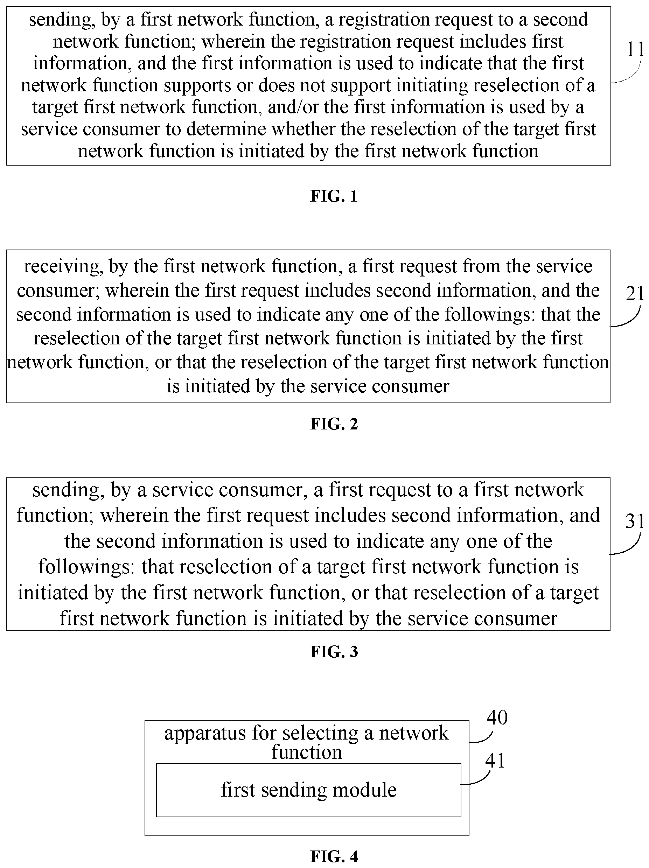

FIG. 1 is a flow chart of a method for selecting a network function provided by an embodiment of the present disclosure. The method is applied to a first network function. As shown in FIG. 1, the method includes the following steps.

Step 11: sending, by a first network function, a registration request to a second network function; wherein the registration request includes first information, and the first information is used to indicate that the first network function supports or does not support initiating reselection of a target first network function, and/or the first information is used by a service consumer to determine whether the reselection of the target first network function is initiated by the first network function.

The first network function may include at least one of the followings: a Network Data Analytics Function (NWDAF), or a Data Collection Coordination Function (DCCF). The target first network function may include at least one of the followings: a target NWDAF, or a target DCCF. The service consumer may be, but is not limited to, a Network Function (NF), a User Equipment (UE), an application function (AF), etc. The first information may be "reselection indication" information.

In some embodiments, the service consumer does not need to instruct the first network function whether to initiate reselection, and local processing is sufficient; that is, a reselection conflict problem is determined by the service consumer itself.

In some embodiments, the second network function is a Network Repository Function (NRF) or a Unified Data Management (UDM) entity, etc. For example, the NWDAF can send a registration request to the NRF, which carries first information, and the first information is used to indicate that the NWDAF supports or does not support initiating reselection of the target NWDAF. At this point, the NWDAF can be understood as an old NWDAF or a source NWDAF, while the target NWDAF can be understood as a new NWDAF or a target NWDAF. For another example, the DCCF can send a registration request to the NRF, which carries first information, and the first information is used to indicate that the DCCF supports or does not support initiating reselection of the target DCCF. At this point, the DCCF can be understood as an old DCCF or a source DCCF, while the target DCCF can be understood as a new DCCF or a target DCCF.

In some embodiments, when the first information is omitted in the registration request, it may be assumed by default that the first network function (such as the NWDAF/DCCF) does not support initiating the reselection of the target first network function (such as target NWDAF/target DCCF). In this case, reselection may be understood as relocation.

Therefore, a registration process may be used to indicate whether the first network function, such as the NWDAF/DCCF, supports the reselection capability, and/or enable the service consumer to determine whether the reselection of the target first network function is initiated by the first network function, thereby clarifying whether the reselection of the target first network function (such as the target NWDAF/target DCCF) is initiated by the first network function (such as the NWDAF/ DCCF).

Optionally, the method for selecting a network function in this embodiment further includes:
receiving, by the first network function, a first request from the service consumer; wherein the first request includes second information, and the second information is used to indicate any one of the followings: the reselection of the target first network function is initiated by the first network function, or the reselection of the target first network function is initiated by the service consumer.

In this way, in the case that both the first network function (such as the NWDAF/DCCF) and the service consumer support initiating reselection, it can be clearly determined which party should initiate the reselection to avoid conflicts. For example, in a data analytics process, when the UE location changes and moves out of a service area of the old NWDAF, it can be negotiated that the service consumer or the old NWDAF will switch the relevant services to the new NWDAF to avoid conflicts in a reselection process. Alternatively, in a data collection process, when the UE location changes and moves out of the service area of the old DCCF, it can be negotiated that the service consumer or the old DCCF will switch the relevant services to the new DCCF to avoid conflicts in the reselection process.

In some embodiments, the second information may be "reselection indication" information.

In some embodiments, when the second information is omitted in the first request, it may be assumed by default that the service consumer may initiate the reselection of the target first network function.

In some embodiments, the first request is a service subscription request. For example, when a service consumer initiates a service subscription request to the NWDAF or the DCCF, the service subscription request carries second information to indicate that the reselection is initiated by the NWDAF or the DCCF, or by the service consumer. When the second information is omitted in the service subscription request, it may be assumed by default that the service consumer selects the target NWDAF or the target DCCF.

Optionally, in the case that the second information indicates that the reselection of the target first network function is initiated by the first network function, the first network function initiates the reselection process and selects the target first network function that supports the required service. For example, the NWDAF selects the target NWDAF (i.e., the new NWDAF) that supports the required service, and the DCCF selects the target DCCF (i.e., the new DCCF) that supports the required service.

Optionally, the target first network function supports the reselection of the target first network function. That is, the selected target first network function (which at this point can be understood as an old first network function) supports reselection of a new first network function. For example, the target NWDAF (i.e., old NWDAF) supports reselection of a new NWDAF; the target DCCF (i.e., old DCCF) supports reselection of a new DCCF.

Optionally, the first network function may select a target first network function by initiating a request to the second network function. The process of the first network function selecting a target first network function that supports the required service may include:
sending, by the first network function, a second request to the second network function, wherein the second request includes third information, and the third information is used to search for or discover the target first network function; for example, the third information is related information such as a terminal location (such as a UE location), which is used by the second network function to search for or discover the target first network function;
receiving, by the first network function, fourth information from the second network function, the fourth information is information related to the target first network function being searched for or discovered, such as an identifier of the target first network function;
determining, by the first network function, the target first network function based on the fourth information.

In some embodiments, the second network function is the NRF or the UDM, etc.

Optionally, when the first network function selects a target first network function that supports the required service, the method for selecting a network function in this embodiment further includes:
sending, by the first network function, a third request to a second network function, wherein the third request is used to search for or discover that the target first network function supports or does not support initiating the reselection of the target first network function; that is, to search for or discover that the selected target first network function (which at this point can be understood as an old first network function) supports reselection of a new first network function;
receiving, by the first network function, fifth information from the second network function, wherein the fifth information is used to indicate that the selected target first network function supports or does not support initiating the reselection of the target first network function, that is, indicates that the selected target first network function (which at this point can be understood as the old first network function) supports or does not support initiating reselection of the new first network function.

In this way, the first network function can be informed whether the selected target first network function supports initiating reselection of a new first network function.

Optionally, in the case that the second information indicates that the reselection of the target first network function is initiated by the service consumer, the method for selecting a network function in this embodiment further includes:
sending, by the first network function, a first response to the service consumer, wherein the first response includes sixth information, and the sixth information is used to indicate the terminal (such as UE(s)) that cannot provide a service, so that the service consumer is informed. For example, the fifth information includes but is not limited to at least one of the followings: an identifier of the terminal (such as ID of the UE(s)), or location information of the terminal (such as location information of the UE(s)), etc.

FIG. 2 is a flow chart of a method for selecting a network function provided by an embodiment of the present disclosure. The method is applied to a first network function. As shown in FIG. 2, the method includes the following steps:
step 21: receiving, by the first network function, a first request from the service consumer; wherein the first request includes second information, and the second information is used to indicate any one of the followings: that the reselection of the target first network function is initiated by the first network function, or that the reselection of the target first network function is initiated by the service consumer.

The first network function may include at least one of the followings: a Network Data Analytics Function (NWDAF), or a Data Collection Coordination Function (DCCF). The target first network function may include at least one of the followings: a target NWDAF, or a target DCCF. The service consumer (such as the service consumer) may be, but is not limited to, the NF, the UE, the AF, etc.

In this way, in the case that both the first network function (such as the NWDAF/DCCF) and the service consumer support initiating reselection, it can be clearly determined which party should initiate the reselection to avoid conflicts. For example, in a data analytics process, when the UE location changes and moves out of a service area of the old NWDAF, it can be negotiated that the service consumer or the old NWDAF will switch the relevant services to the new NWDAF to avoid conflicts in a reselection process. Alternatively, in a data collection process, when the UE location changes and moves out of the service area of the old DCCF, it can be negotiated that the service consumer or the old DCCF will switch the relevant services to the new DCCF to avoid conflicts in the reselection process.

In some embodiments, when the second information is omitted in the first request, it may be assumed by default that the service consumer may initiate the reselection of the target first network function.

In some embodiments, the first request is a service subscription request. For example, when a service consumer initiates a service subscription request to the NWDAF or the DCCF, the service subscription request carries second information to indicate that the reselection is initiated by the NWDAF or the DCCF, or by the service consumer. When the second information is omitted in the service subscription request, it may be assumed by default that the service consumer selects the target NWDAF or the target DCCF.

Optionally, in the case that the second information indicates that the reselection of the target first network function is initiated by the first network function, the first network function initiates the reselection process and selects the target first network function that supports the required service. For example, the NWDAF selects the target NWDAF (i.e., the new NWDAF) that supports the required service, and the DCCF selects the target DCCF (i.e., the new DCCF) that supports the required service.

Optionally, the target first network function supports the reselection of the target first network function. That is, the selected target first network function (which at this point can be understood as the old first network function) supports reselection of a new first network function. For example, the target NWDAF (i.e., old NWDAF) supports reselection of a new NWDAF; the target DCCF (i.e., old DCCF) supports reselection of a new DCCF.

Optionally, the first network function may select a target first network function by initiating a request to the second network function. The process of the first network function selecting a target first network function that supports the required service may include the following steps:
sending, by the first network function, a second request to the second network function, wherein the second request includes third information, and the third information is used to search for or discover the target first network function; for example, the third information is related information such as a terminal location (such as a UE location), which is used by the second network function to search for or discover the target first network function;
receiving, by the first network function, fourth information from the second network function, wherein the fourth information is information related to the target first network function being searched for or discovered, such as an identifier of the target first network function;
determining, by the first network function, the target first network function based on the fourth information.

In some embodiments, the second network function is the NRF or the UDM, etc.

Optionally, when the first network function selects a target first network function that supports the required service, the method for selecting a network function in this embodiment further includes:
sending, by the first network function, a third request to a second network function, wherein the third request is used to search for or discover that the selected target first network function supports or does not support initiating the reselection of the target first network function; that is, to search for or discover that the selected target first network function (which at this point can be understood as an old first network function) supports reselection of a new first network function;
receiving, by the first network function, fifth information from the second network function, wherein the fifth information is used to indicate that the selected target first network function supports or does not support initiating the reselection of the target first network function, that is, indicates that the selected target first network function (which at this point can be understood as the old first network function) supports or does not support initiating reselection of the new first network function.

In this way, the first network function can be informed whether the selected target first network function supports initiating reselection of a new first network function.

Optionally, in the case that the second information indicates that the reselection of the target first network function is initiated by the service consumer, the method for selecting a network function in this embodiment further includes:
sending, by the first network function, a first response to the service consumer, wherein the first response includes sixth information, and the sixth information is used to indicate the terminal (such as UE(s)) that cannot provide a service, so that the service consumer is informed. For example, the fifth information includes but is not limited to at least one of the followings: an identifier of the terminal (such as ID of the UE(s)), or location information of the terminal (such as location information of the UE(s)), etc.

FIG. 3 is a flow chart of a method for selecting a network function provided by an embodiment of the present disclosure. The method is applied to a service consumer. As shown in FIG. 3, the method includes the following steps:
step 31: sending, by a service consumer, a first request to a first network function; wherein the first request includes second information, and the second information is used to indicate any one of the followings: that reselection of a target first network function is initiated by the first network function, or that reselection of a target first network function is initiated by the service consumer.

The first network function may include at least one of the followings: a Network Data Analytics Function (NWDAF), or a Data Collection Coordination Function (DCCF). The target first network function may include at least one of the followings: a target NWDAF, or a target DCCF. The service consumer (such as the service consumer) may be, but is not limited to, the NF, the UE, the AF, etc.

In this way, in the case that both the first network function (such as the NWDAF/DCCF) and the service consumer support initiating reselection, it can be clearly determined which party should initiate the reselection to avoid conflicts. For example, in a data analytics process, when the UE location changes and moves out of a service area of the old NWDAF, it can be negotiated that the service consumer or the old NWDAF will switch the relevant services to the new NWDAF to avoid conflicts in a reselection process. Alternatively, in a data collection process, when the UE location changes and moves out of the service area of the old DCCF, it can be negotiated that the service consumer or the old DCCF will switch the relevant services to the new DCCF to avoid conflicts in the reselection process.

In some embodiments, when the second information is omitted in the first request, it may be assumed by default that the service consumer may initiate the reselection of the target first network function.

In some embodiments, the first request is a service subscription request. For example, when a service consumer initiates a service subscription request to the NWDAF or the DCCF, the service subscription request carries second information to indicate that the reselection is initiated by the NWDAF or the DCCF, or by the service consumer. When the second information is omitted in the service subscription request, it may be assumed by default that the service consumer selects the target NWDAF or the target DCCF.

In some embodiments, after a service consumer subscribes to a data analytics service or a data collection service related to a UE, when the UE changes location, the service consumer and the service provider can determine which device initiates the reselection process based on the reselection indication information carried in the service subscription process, thereby avoiding potential reselection logic conflicts, enabling conflict-free continuous data analytics and data collection capabilities, and ensuring the continuity of services between multiple instances of the NWDAF and multiple instances of the DCCF.

For example, after the service consumer subscribes to a NWDAF service, the UE location is obtained by the NF, such as an Access and Mobility Management Function (AMF), a Location Management Function (LMF), a Gateway Mobile Location Centre (GMLC), etc., which is subscribed by the source NWDAF and is capable of reporting the location information of the UE. When the UE location changes, the NF (such as the AMF, the LMF, the GMLC, etc.) notifies the old NWDAF of the UE's location change. The old NWDAF determines whether it can continue to provide a service to the service consumer based on the new UE location. If not, it determines whether to initiate the reselection process of the new NWDAF based on the indication information carried by the service consumer. Similarly, after the service consumer subscribes to the DCCF service, the UE location is obtained by the NF, such as the AMF, the LMF, the GMLC, etc., which is subscribed by the source DCCF and is capable of reporting the location information of the UE. When the UE location changes, the NF (such as AMF, LMF, GMLC, etc.) notifies the old DCCF of the UE's location change, and the old DCCF determines whether it can continue to provide the service to the service consumer based on the new UE location. If not, it determines whether to initiate the reselection process of the new DCCF based on the indication information carried by the service consumer.

Optionally, in the case that the second information indicates that the reselection of the target first network function is initiated by the service consumer, the service consumer initiates the reselection process and selects the target first network function that supports the required service. For example, the service consumer selects the target NWDAF (i.e., new NWDAF) that supports the required service based on the UE location or other relevant information; the service consumer selects the target DCCF (i.e., new DCCF) that supports the required service based on the UE location or other relevant information.

Optionally, the service consumer may determine whether the NWDAF/DCCF supports reselection through a second network function (such as the NRF or the UDM) or a local static configuration. The method for selecting a network function in this embodiment may further include:
sending, by the service consumer, a fourth request to a second network function, wherein the fourth request is used to search for or discover that the first network function supports or does not support initiating the reselection of the target first network function (for example, this capability may be indicated during the registration process of the first network function); and receiving sixth information from the second network function, wherein the sixth information is used to indicate that the first network function supports or does not support initiating the reselection of the target first network function;
determining, by the service consumer, based on pre-configured information, that the first network function supports or does not support initiating the reselection of the target first network function.

In this way, when the first network function supports initiating the reselection of the target first network function, the reselection process can be initiated by the first network function. Conversely, when the first network function does not support initiating the reselection of the target first network function, the reselection process can be initiated by the service consumer.

The method for selecting the network function provided by an embodiment of the present disclosure may be performed by an apparatus for selecting a network function. The method for selecting a network function performed by an apparatus for selecting a network function is taken as an example to illustrate the apparatus for selecting a network function provided in the embodiment of the present disclosure.

FIG. 4 is a structural diagram of an apparatus for selecting a network function provided by an embodiment of the present disclosure. The apparatus is applied to a first network function, and the first network function includes but is not limited to at least one of: a Network Data Analytics Function (NWDAF), or a Data Collection Coordination Function (DCCF). As shown in FIG. 4, an apparatus 40 for selecting a network function includes:
a first sending module 41, configured to send a registration request to a second network function; wherein the registration request includes first information, and the first information is used to indicate that a first network function supports or does not support initiating reselection of a target first network function, and/or the first information is used by a service consumer to determine whether the reselection of the target first network function is initiated by the first network function.

Optionally, the apparatus 40 for selecting a network function further includes:
a first receiving module, configured to receive a first request from a service consumer;
wherein the first request includes second information, and the second information is used to indicate any one of the followings: that reselection of a target first network function is initiated by a first network function, or that reselection of a target first network function is initiated by the service consumer.

Optionally, in the case that the second information indicates that the reselection of the target first network function is initiated by the first network function, the apparatus 40 for selecting a network function further includes:
a first processing module, configured to select a target first network function that supports a required service.

Optionally, the first processing module is specifically configured to: send a second request to a second network function, wherein the second request includes third information, and the third information is used to search for or discover the target first network function; receive fourth information from the second network function, wherein the fourth information is information related to the target first network function being searched for or discovered; determine the target first network function based on the fourth information.

Optionally, the apparatus 40 for selecting a network function further includes:
a second sending module, configured to send a third request to a second network function, wherein the third request is used to search for or discover that the target first network function supports or does not support initiating the reselection of the target first network function;
a second receiving module, configured to receive fifth information from the second network function, wherein the fifth information is used to indicate that the target first network function supports or does not support initiating the reselection of the target first network function.

Optionally, the target first network function supports the reselection of the target first network function.

Optionally, in the case that the second information indicates that the reselection of the target first network function is initiated by the service consumer, the apparatus 40 for selecting a network function further includes:
a third sending module, configured to send a first response to the service consumer, wherein the first response includes sixth information, and the sixth information is used to indicate a terminal that cannot provide a service.

Optionally, the sixth information includes at least one of the followings: an identifier of the terminal, or location information of the terminal.

Optionally, the first network function includes at least one of the followings: a Network Data Analytics Function (NWDAF), or a Data Collection Coordination Function (DCCF);

The target first network function includes at least one of the followings: a target NWDAF, or a target DCCF.

It can be understood that the apparatus 40 for selecting a network function in the embodiment of the present disclosure can implement each process of the method embodiment shown in FIG. 1 above, and can achieve the same technical effects. To avoid repetition, the details are not repeated herein.

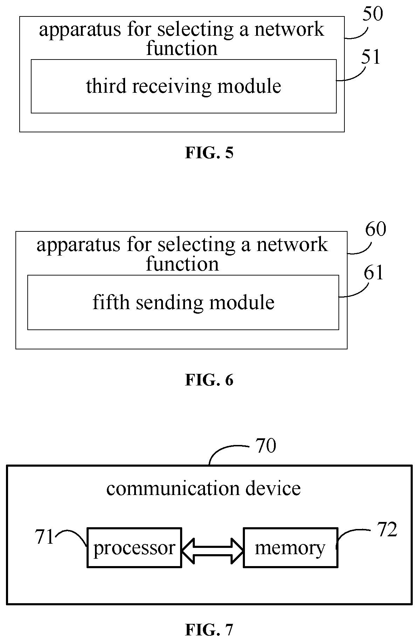

FIG. 5 is a structural diagram of an apparatus for selecting a network function provided by an embodiment of the present disclosure. The apparatus is applied to a first network function, and the first network function includes but is not limited to at least one of: a Network Data Analytics Function (NWDAF), or a Data Collection Coordination Function (DCCF). As shown in FIG. 5, an apparatus 50 for selecting a network function includes:
a third receiving module 51, configured to receive a first request from a service consumer;
wherein the first request includes second information, and the second information is used to indicate any one of the followings: that reselection of a target first network function is initiated by a first network function, or that reselection of a target first network function is initiated by the service consumer.

Optionally, in the case that the second information indicates that the reselection of the target first network function is initiated by the first network function, the apparatus 50 for selecting a network function further includes:
a second processing module, configured to select a target first network function that supports a required service.

Optionally, the second processing module is specifically configured to: send a second request to a second network function, wherein second request includes third information, and the third information is used to search for or discover the target first network function; receive fourth information from the second network function, wherein the fourth information is information related to the target first network function being searched for or discovered; determine the target first network function based on the fourth information.

Optionally, the apparatus 50 for selecting a network function further includes:
a fourth sending module, configured to send a third request to a second network function, wherein the third request is used to search for or discover that the target first network function supports or does not support initiating the reselection of the target first network function;
a fourth receiving module, configured to receive fifth information from the second network function, wherein the fifth information is used to indicate that the target first network function supports or does not support initiating the reselection of the target first network function.

Optionally, the target first network function supports the reselection of the target first network function.

Optionally, the first network function includes at least one of the followings: a NWDAF, or a DCCF;
the target first network function includes at least one of the followings: a target NWDAF, or a target DCCF.

It can be understood that the apparatus 50 for selecting a network function in the embodiment of the present disclosure can implement each process of the method embodiment shown in FIG. 2 above, and can achieve the same technical effects. To avoid repetition, the details are not repeated here.

Please refer to FIG. 6, which is a structural diagram of an apparatus for selecting a network function provided by an embodiment of the present disclosure. The apparatus is applied to a service consumer, and the service consumer includes but is not limited to at least one of: an NF, an AF, or a UE, etc. As shown in FIG. 6, an apparatus 60 for selecting a network function includes:
a fifth sending module 61, configured to send a first request to a first network function;
wherein the first request includes second information, and the second information is used to indicate any one of the followings: that reselection of a target first network function is initiated by the first network function, or that reselection of a target first network function is initiated by the service consumer.

Optionally, in the case that the second information indicates that the reselection of the target first network function is initiated by the service consumer, the apparatus 60 for selecting a network function further includes:
a third processing module, configured to select a target first network function that supports a required service.

Optionally, the apparatus 60 for selecting a network function further includes:
an execution module, configured to perform at least one of the followings:
sending a fourth request to a second network function, wherein the fourth request is used to search for or discover that the first network function supports or does not support initiating the reselection of the target first network function; and receiving sixth information from the second network function, wherein the sixth information is used to indicate that the first network function supports or does not support initiating the reselection of the target first network function; or
determining, based on pre-configured information, that the first network function supports or does not support initiating the reselection of the target first network function.

Optionally, the first network function includes at least one of the followings: a NWDAF, or a DCCF;
the target first network function includes at least one of the followings: a target NWDAF, or a target DCCF.

It can be understood that the apparatus 60 for selecting a network function in the embodiment of the present disclosure can implement each process of the method embodiment shown in FIG. 3 above, and can achieve the same technical effects. To avoid repetition, the details are not repeated here.

Optionally, as shown in FIG7, the embodiment of the present disclosure further provides a communication device 70, including a processor 71 and a memory 72, wherein the memory 72 stores a program or an instruction that can be executed by the processor 71. For example, when the communication device 70 serves as a first network function, the program or the instruction is executed by the processor 71 to implement the steps of the method embodiment for selecting a network function shown in FIG. 1 or FIG. 2, and can achieve the same technical effects. When the communication device 70 serves as a service consumer, the program or the instruction is executed by the processor 71 to implement the steps of the method embodiment for selecting a network function shown in FIG. 3, and can achieve the same technical effects. To avoid repetition, these details are not repeated here.

An embodiment of the present disclosure further provides a readable storage medium storing a program or an instruction. When executed by a processor, the program or the instruction implements each process of the above-mentioned method embodiment for selecting a network function and achieves the same technical effects. To avoid repetition, these details are not repeated here.

A computer-readable medium includes permanent and non-permanent, removable and non-removable media, and can be implemented by any method or technology to store information. Information may be computer-readable instructions, data structures, program modules or other data. Examples of computer storage media include, but are not limited to, Phase- Change Memory (PRAM), Static Random Access Memory (SRAM), Dynamic Random Access Memory (DRAM), other types of Random Access Memory (RAM), Read-Only Memory (ROM), Electrically Erasable Programmable Read Only Memory (EEPROM), flash memory or other memory technology, Compact Disc Read-Only Memory (CD-ROM), Digital Video Disc (DVD) or other optical storage, magnetic cassettes, magnetic tape, magnetic disk storage or other magnetic storage devices or any other non-transmission medium that can be used to store information that may be accessed by a computing device. As defined herein, computer-readable media does not include transitory computer-readable media (transitory media), such as modulated data signals and carrier waves.

It should be noted that in this document, the terms "comprise", "includes" or any other variations thereof are intended to cover a non-exclusive inclusion, so that a process, a method, an article or an apparatus including a series of elements includes not only those elements, but also other elements not explicitly listed, or inherent to such a process, a method, an article or an apparatus. Without further limitation, an element defined by the phrase "comprising a..." does not exclude the existence of additional, identical elements in the process, the method, the article, or the apparatus that comprises said element.

The sequence numbers of the embodiments in the present disclosure are for description purposes only and do not represent any preference or superiority among the embodiments.

Through the description of the embodiments, those skilled in the art can clearly understand that the methods of the above embodiments can be implemented by means of software in combination with a necessary general-purpose hardware platform. Obviously, they can also be implemented by hardware, but in many cases, the former is a better implementation. Based on such an understanding, essential parts, or parts contributing to the prior art of the technical solution of the present disclosure may be embodied in a form of a software product. This computer software product is stored on a storage medium (such as an ROM/RAM, a magnetic dis, or an optical disk), and includes several instructions for enabling a service classification device (which can be a mobile phone, a computer, a server, an air conditioner, or a network device, etc.) to execute the methods described in the embodiments of the present disclosure.

The above are only preferred embodiments of the present disclosure. It should be noted that for those of ordinary skill in the art, improvements and modifications may be made without departing from the principles of the present disclosure. These improvements and modifications shall also be considered within the protection scope of the present disclosure.

## Claims

1. A method for selecting a network function, comprising:
sending, by a first network function, a registration request to a second network function; wherein the registration request comprises first information, and the first information is used to indicate that the first network function supports or does not support initiating reselection of a target first network function, and/or the first information is used by a service consumer to determine whether the reselection of the target first network function is initiated by the first network function.

2. The method according to claim 1, further comprising:
receiving, by the first network function, a first request from the service consumer; wherein the first request comprises second information, and the second information is used to indicate any one of the followings: that the reselection of the target first network function is initiated by the first network function, or that the reselection of the target first network function is initiated by the service consumer.

3. The method according to claim 2, wherein in the case that the second information indicates that the reselection of the target first network function is initiated by the first network function, the method further comprises:
selecting, by the first network function, the target first network function that supports a required service.

4. The method according to claim 3, wherein the selecting, by the first network function, the target first network function that supports the required service, comprising:
sending, by the first network function, a second request to the second network function, wherein the second request comprises third information, and the third information is used to search for or discover the target first network function;
receiving, by the first network function, fourth information from the second network function, the fourth information is information related to the target first network function being searched for or discovered;
determining, by the first network function, the target first network function based on the fourth information.

5. The method according to claim 3, further comprising:
sending, by the first network function, a third request to the second network function, wherein the third request is used to search for or discover that the target first network function supports or does not support initiating the reselection of the target first network function;
receiving, by the first network function, fifth information from the second network function, wherein the fifth information is used to indicate that the target first network function supports or does not support initiating the reselection of the target first network function.

6. The method according to claim 3, wherein the target first network function supports the reselection of the target first network function.

7. The method according to claim 2, wherein in the case that the second information indicates that the reselection of the target first network function is initiated by the service consumer, the method further comprises:
sending, by the first network function, a first response to the service consumer, wherein the first response comprises sixth information, and the sixth information is used to indicate a terminal that cannot provide a service.

8. The method according to claim 7, wherein the sixth information comprises at least one of the followings: an identifier of the terminal, or location information of the terminal.

9. The method according to any one of claims 1 to 8, wherein the first network function comprises at least one of the followings: a Network Data Analytics Function (NWDAF), or a Data Collection Coordination Function (DCCF);
the target first network function comprises at least one of the followings: a target NWDAF, or a target DCCF.

10. A method for selecting a network function, comprising:
receiving, by a first network function, a first request from a service consumer; wherein the first request comprises second information, and the second information is used to indicate any one of the followings: that reselection of a target first network function is initiated by the first network function, or reselection of a target first network function is initiated by the service consumer.

11. The method according to claim 10, wherein in the case that the second information indicates that the reselection of the target first network function is initiated by the first network function, the method further comprises:
selecting, by the first network function, the target first network function that supports a required service.

12. The method according to claim 11, wherein selecting, by the first network function, the target first network function that supports the required service, comprising:
sending, by the first network function, a second request to a second network function, wherein the second request comprises third information, and the third information is used to search for or discover the target first network function;
receiving, by the first network function, fourth information from the second network function, wherein the fourth information is information related to the target first network function being searched for or discovered;
determining, by the first network function, the target first network function based on the fourth information.

13. The method according to claim 10, further comprising:
sending, by the first network function, a third request to a second network function, wherein the third request is used to search for or discover that the target first network function supports or does not support initiating the reselection of the target first network function;
receiving, by the first network function, fifth information from the second network function, wherein the fifth information is used to indicate that the target first network function supports or does not support initiating the reselection of the target first network function.

14. The method according to claim 13, wherein the target first network function supports the reselection of the target first network function.

15. The method according to any one of claims 10 to 14, wherein the first network function comprises at least one of the followings: a Network Data Analytics Function (NWDAF), or a Data Collection Coordination Function (DCCF);
the target first network function comprises at least one of the followings: a target NWDAF, or a target DCCF.

16. A method for selecting a network function, comprising:
sending, by a service consumer, a first request to a first network function; wherein the first request comprises second information, and the second information is used to indicate any one of the followings: that reselection of a target first network function is initiated by the first network function, or that reselection of a target first network function is initiated by the service consumer.

17. The method according to claim 16, wherein in the case that the second information indicates that the reselection of the target first network function is initiated by the service consumer, the method further comprises:
selecting, by the service consumer, the target first network function that supports a required service.

18. The method according to claim 16, further comprising at least one of the followings:
sending, by the service consumer, a fourth request to a second network function, wherein the fourth request is used to search for or discover that the first network function supports or does not support initiating the reselection of the target first network function; and receiving sixth information from the second network function, wherein the sixth information is used to indicate that the first network function supports or does not support initiating the reselection of the target first network function; or
determining, by the service consumer, based on pre-configured information, that the first network function supports or does not support initiating the reselection of the target first network function.

19. The method according to any one of claims 16 to 18, wherein the first network function comprises at least one of the followings: a Network Data Analytics Function (NWDAF), or a Data Collection Coordination Function (DCCF);
the target first network function comprises at least one of the followings: a target NWDAF, or a target DCCF.

20. An apparatus for selecting a network function, comprising:
a first sending module, configured to send a registration request to a second network function; wherein the registration request comprises first information, and the first information is used to indicate that a first network function supports or does not support initiating reselection of a target first network function, and/or the first information is used by a service consumer to determine whether the reselection of the target first network function is initiated by the first network function.

21. An apparatus for selecting a network function, comprising:
a third receiving module, configured to receive a first request from a service consumer;
wherein the first request comprises second information, and the second information is used to indicate any one of the followings: that reselection of a target first network function is initiated by a first network function, or that reselection of a target first network function is initiated by the service consumer.

22. An apparatus for selecting a network function, comprising:
a fifth sending module, configured to send a first request to a first network function;
wherein the first request comprises second information, and the second information is used to indicate any one of the followings: reselection of a target first network function is initiated by the first network function, or reselection of a target first network function is initiated by a service consumer.

23. A communication device, comprising a processor, a memory, and a program or an instruction stored in the memory and executable on the processor, wherein the program or the instruction, when executed by the processor, implements the steps of the method for selecting the network function according to any one of claims 1 to 9, or the steps of the method for selecting the network function according to any one of claims 10 to 15, or the steps of the method for selecting the network function according to any one of claims 16 to 19.

24. A readable storage medium storing a program or an instruction, wherein the program or the instruction, when executed by a processor, implements the steps of the method for selecting the network function according to any one of claims 1 to 9, or the steps of the method for selecting the network function according to any one of claims 10 to 15, or the steps of the method for selecting the network function according to any one of claims 16 to 19.
